# EUROPEAN PATENT APPLICATION

(11) **EP 4 484 176 A1**
(43) Date of publication of application: **01.01.2025**
(21) Application number: 23759975.8
(22) Date of filing: 21.02.2023
(51) Int. Cl.: B43K 8/03, B43K 3/00, B43K 8/00, B43K 8/02, B43K 23/08, C09D 11/16

(54) **WRITING IMPLEMENT**

(30) Priority: 25.02.2022 JP 2022027978
(71) Applicant: Mitsubishi Pencil Company, Limited, Tokyo 140-8537 (JP)
(72) Inventor: ONODERA, Yutaka, Tokyo 140-8537 (JP); OGURA, Kosuke, Tokyo 140-8537 (JP); YAMADA, Masaya, Tokyo 140-8537 (JP); MANTA, Yoshihiro, Tokyo 140-8537 (JP)
(74) Representative: Vossius & Partner Patentanwälte Rechtsanwälte mbB
(86) International application number: PCT/JP2023/006234
(87) International publication number: WO 2023/162974

(57) **Abstract**

The present invention provides a writing implement capable of contributing to environmental protection through plastic reduction as a result of forming an ink holding container from a material including a paper base material. A writing implement 1 has a container body 2 which holds ink, a writing section 62 disposed at an opening of the container body 2, and a removable cap member 68 which covers the writing part 62, wherein writing on a writing surface is made possible by causing the ink inside the container body 2 to flow from the writing part 62. The container body 2 is formed using a laminate material having a sealant layer on a surface, which serves as the innermost layer of the container, with paper being used as a base material, the container body 2 by being formed by adhering the sealant layer. The writing part 62 is removably attached at the opening of the container body 2.

## Description

### Technical Field

This invention relates to a writing instrument with reduced environmental load by using an ink container made of paper-based material.

### Background Art

Writing instruments have been provided that contain a liquid such as coating material, paint, or ink in a container and supply the above-described liquid such as ink to a writing part made of, for example, a synthetic resin porous material attached to the mouth of the container.

According to this writing instrument, the writing part has a relatively large surface area, and liquid such as ink in a container can be applied or drawn onto a writing surface (such as paper) by exuding liquid onto the writing part of the porous material.

Since the width of the line drawn by the writing part is generally thicker and a relatively large amount of ink is consumed in this type of writing instrument, bottle-shaped ink containers with a relatively large capacity are used, as disclosed in Patent Literature 1, for example.
The ink containers used for these writing instruments are formed of plastic materials such as polypropylene (PP) resin or polyethylene terephthalate (PET) resin, for example.

### Citation List

### Patent Literature

PTL 1: JP-A-2006-123305

### Summary of Invention

### Technical Problem

In recent years, attention has been focused on the problem of microplastics entering the ocean, and there is growing momentum for efforts to address global environmental issues such as reducing the use of single-use plastics. De-plasticization is also focused on some of the components constituting writing instruments. The applicant has previously proposed a writing instrument refill that can achieve low pollution by using a composite material including a paper-based material to form the ink container contained within the barrel with a writing tip attached to the front end.

With further development, this invention focuses on a relatively large-capacity ink container that also serves as the gripping part (barrel) of a writing instrument molded from plastics such as the above-mentioned PP resin, and attempts to replace it with a material containing a paper-based material.

With this, the aim is to provide a writing instrument that contributes to environmental protection by eliminating plastic.

### Solution to Problem

In order to solve the above-described problems, a writing instrument of this invention includes a container body containing ink, a writing part disposed at the mouth of the container body, and a removable cap member covering the writing part, and enables writing on a writing surface by allowing ink in the container body to exude from the writing part, wherein the container body is made of a paper-based laminated material having a sealant layer on the innermost container surface, and the sealant layer is pasted together to form the container body.

Furthermore, the writing part is preferably detachably attached to the mouth of the container body.

In this case, a holder supporting the writing part is preferably disposed at the mouth of the container body, and the writing part is configured to be attached to the holder by screwing.

### Advantageous Effects of the Invention

According to this invention, the relatively large-volume container body containing the ink is formed of a paper-based laminated material, which contributes to environmental protection by de-plasticization.

In addition, since the container body is constructed by pasting the sealant layer applied to the innermost surface of the container into the laminated material, it is possible to provide an unbreakable ink container with excellent sealing properties for the container.

In addition, a container body formed of a paper-based laminated material can impart more flexibility to the entire container compared to containers made of plastic materials such as PP. Therefore, by moderately and repeatedly deforming the container body, an effective stirring effect can be imparted to the ink in the container, containing, for example, titanium dioxide as a colorant.

### Brief Description of Drawings

Figs. 1A through 1C are diagrams of an external configuration of the entire writing instrument of this invention; Fig. 1A is a perspective view illustrating the writing part with the cap member attached, Fig. 1B is a perspective view illustrating the writing part with the cap member removed, and Fig. 1C is a perspective view illustrating the writing part further removed.
Fig. 2 is a front view of the writing instrument shown in Fig. 1A through 1C in the state of drawing a line on a horizontal writing surface.
Fig. 3 is a development view of the laminated material that forms the container body of the writing instrument shown in Fig. 1A through 1C.
Fig. 4 is a cross-sectional view of the laminated material showing the layer structure thereof.
Figs. 5A through 5E are views of the overall configuration of the writing unit; Fig. 5A is a diagonal view, 5B is a front view, 5C is a side view, 5D is a top view, and 5E is a bottom view.
Figs. 6A and 6B are enlarged cross-sectional views of the writing unit, Fig. 6A is a front cross-sectional view, and Fig. 6B is a side cross-sectional view.
Figs. 7A through 7E are views illustrating a single component configuration of the holder supporting the writing part; Fig. 7A is a perspective view viewed from the top, Fig. 7B is a perspective view viewed from the bottom, Fig. 7C is a top view, Fig. 7D is a front view, Fig. E is a side view, and Fig. 7F is a front cross-sectional view.
Figs. 8A through 8E are diagrams of an external configuration of the writing part; Fig. 8A is a perspective view, Fig. 8B is a front view, Fig. 8C is a side view, Fig. 8D is a top view, and Fig. 8E is a bottom view.
Figs. 9A and 9B are also an enlarged cross-sectional view of the writing part; Fig. 9A is a frontal cross-sectional view and Fig. 9B is a side cross-sectional view.

### Description of Embodiments

The writing instruments of this invention will be described based on the embodiments shown in the drawings.

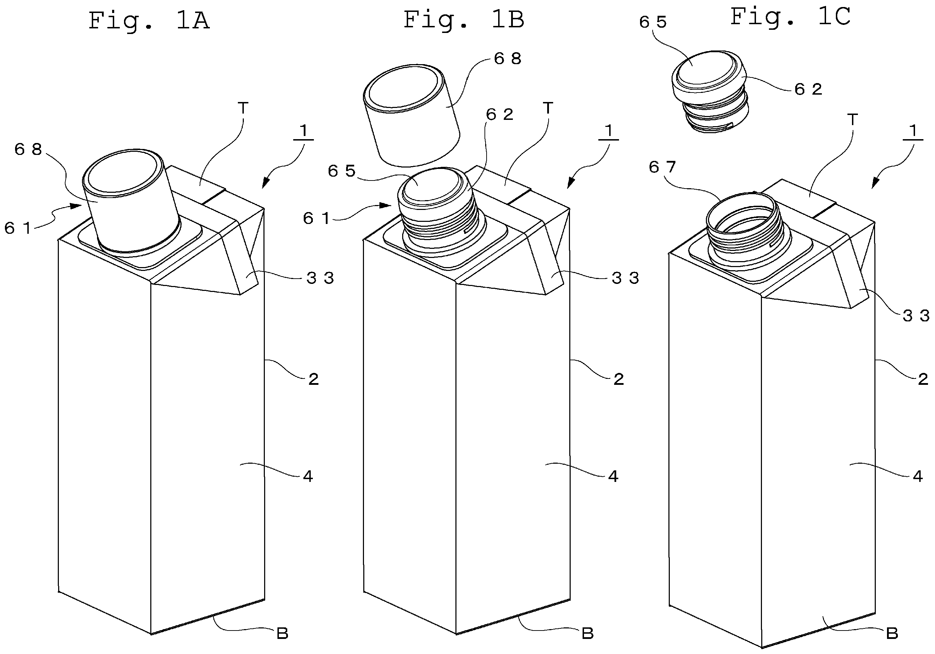

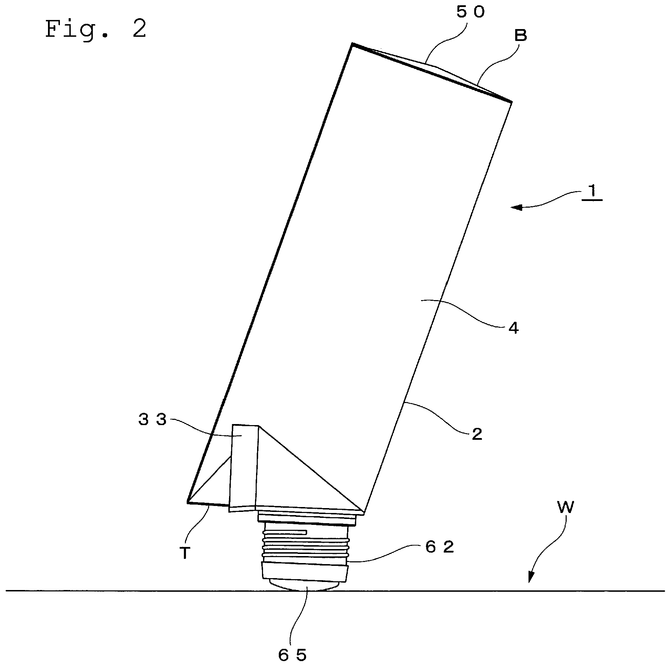

Figs. 1A to 1C and Fig. 2 are diagrams of an external configuration of the entire writing instrument of this invention; the writing instrument 1 includes a container body 2 containing writing ink (not shown), a writing part 62 disposed at a mouth 29 to be described below formed in the container body 2, and a detachable cap member 68 covering the writing part 62.

Thus, the ink in the container body 2 can be exuded into a writing member 65 of the writing part 62 to draw a line on the writing surface W.

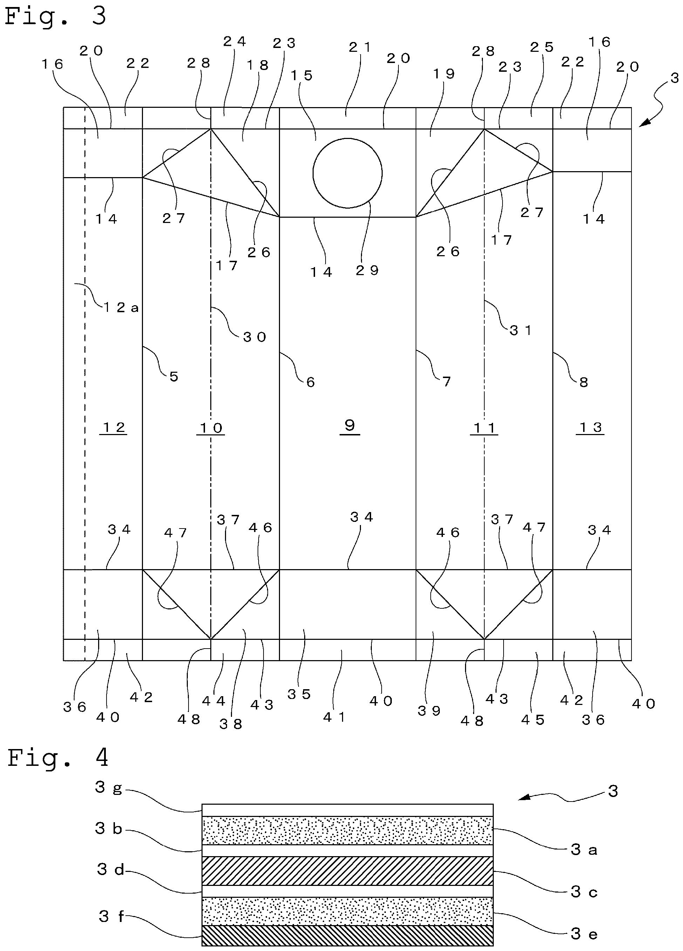

The container body 2 is made of a paper-based laminated material 3 (Figs. 3 and 4); in the illustrated example, the body 4 is formed into a prismatic shape, and a writing unit 61 including a writing part 62, a cap member 68, and others is attached to the mouth 29 formed on the top surface T.

The top surface T is formed into an inclined plane which becomes slightly lower from the rear side to the front side of the container body 2, and the writing part 62 is mounted protruding in a direction orthogonal to this inclined plane. Therefore, as shown in Fig.2, when the writing part 62 is turned downward and the writing part 62 is in contact with the horizontal writing surface W, the body 4 of the container body 2 assumes a slightly inclined position with respect to the vertical direction.

The bottom surface B of the container body 2 is formed in an approximately square shape orthogonal to the longitudinal direction of the body 4, and by placing this bottom surface B on a horizontal surface, the container body 2 of the writing instrument 1 can be stored in a vertical, upright position.

Fig. 3 shows the laminated material 3 forming the container body 2 in a developed state. The laminated material 3 is formed by joining a front panel 9 in the center, side panels 10 and 11 on each side, and a pair of rear panels 12 and 13 on each side, via vertical fold lines 5, 6, 7, and 8 of the body forming a square columnar body 4. In this example, an adhesive allowance 12a is formed along the edge of one of the rear panels 12 of the body.

The top panels 15 and 16 are connected to the front panel 9 and the rear panels 12 and 13 of the body, which form the top surface T of the container body 2, via a first top transverse fold line 14, and the side panels 18, 19 are connected to the left and right side panels 10, 11 of the body, via a second top transverse fold line 17.

The top panels 15 and 16 described above are connected to a first top seal panel 21, 22 via a first top seal transverse fold line 20, and a pair of second top seal panels 24, 25 are connected to a pair of side panels 18, 19 via a second top seal transverse fold line 23.

A pair of side panels 18 and 19 have oblique ruled lines 26 and 27 connecting to the ends of the second top transverse fold line 17 from the midpoint of the second top seal panel transverse fold line 23, and the second top seal panels 24, 25 have a side top seal vertical fold line 28 that hangs down from the top of the second top seal panel 24, 25 to the midpoint of the second top seal panel transverse fold line 23.

The top panel 15, which is connected to the front panel 9 of the body via the first top transverse fold line 14, has a circular mouth 29 where the writing unit 61 is mounted, for example, by a punching process.

In addition, in this embodiment, the pair of side panels 18, 19 and the left and right side panels 10, 11 of the body to which the pair of side panels 18, 19 are joined are provided with folding guide ruled lines 30, 31 across the second top transverse fold line 17 and at the center of the left and right side panels 10, 11 of the body, respectively.

Meanwhile, the bottom panels 35 and 36 are connected to the front panel 9 and the rear panels 12 and 13 of the body forming the bottom B of the container body 2 via a first bottom transverse fold line 34, and the side panels 38 and 39 are connected to the left and right side panels 10 and 11 of the body by a second bottom transverse fold line 37.

First bottom seal panels 41 and 42 are connected to the bottom panels 35 and 36 via a first bottom seal transverse fold line 40, and a pair of second bottom seal panels 44 and 45 are connected to a pair of side panels 38 and 39 via a second bottom seal transverse fold line.

A pair of side panels 38 and 39 have oblique ruled lines 46 and 47 formed connecting both the ends of the second bottom transverse fold line 37 from the midpoint of the second bottom seal panel transverse fold line 43, and the second bottom seal panels 44, 45 have a side bottom seal vertical fold line 48 formed from the lower ends of the second bottom seal panel 44, 45 to the midpoint of the second bottom seal panel transverse fold line 43.

Fig. 4 shows an example of the layer structure of the laminated material 3 forming the container body 2 described above.

The laminated material 3 includes, from the outside to the inside of the container body 2, a first paper-based material layer 3a constituting the first paper-based material, an intermediate layer 3c formed inside the first paper-based material layer 3a and being a metal layer or a silica-deposited layer, and a second paper-based material layer 3e constituting the second paper-based material and formed inside the intermediate layer 3c. The layered structure is formed with a first adhesive layer 3b between the first paper-based material layer 3a and the intermediate layer 3c, joining both, and a second adhesive layer 3d between the intermediate layer 3c and the second paper-based material layer 3e, joining both.

Further, on the inside of the second paper-based material layer 3e, a sealant layer 3f made of a thermoplastic resin, which is adhesively processed by ultrasonic sealing or the like is formed. If necessary, a printed layer 3g having a product name or logo of the writing instrument 1 is formed on the outside of the first paper-based material layer 3a.

The same material can be used for paper-based material constituting the first paper-based material layer 3a and the second paper-based material layer 3e, and various known materials can be used such as woodfree paper, ordinary grade paper, glazed paper, kraft paper, glazed kraft paper, bleached kraft paper, paperboard, white paperboard, liner board, lightly coated paper, coated paper, art paper, cast-coated paper, glassine paper, parchment paper, and vulcanized fiber. The density of these paper-based materials is preferably 0.8 g/cm³ or higher. By using paper-based materials having a density of 0.8 g/cm³ or higher, sufficient water resistance and oil resistance can be provided.

The paper-based material constituting the first paper-based material layer 3a and the second paper-based material layer 3e is more particularly preferred to be glassine paper, parchment paper, or vulcanized fiber having a density of 0.8 g/cm³ or higher.

Glassine paper is a dense, highly transparent paper, made by highly beating virgin pulp to increase its specific surface area and paper-made, and then treating the paper with a supercalender machine to densify it and strengthen the bonds between cellulose fibers. Glassine paper with a basis weight of 20 to 50 g/m² is used in this invention. By using glassine paper for the first paper-based material layer 3a and the second paper-based material layer 3e, it is easier to provide water resistance and oil resistance. Glassine paper with a basis weight of 20 to 50 g/m² may also be used as a base paper, one or both sides of which are applied with a coating solution such as a polyvinyl alcohol solution. The thickness of glassine paper is usually 20-50 um, preferably 20-30 um.

Parchment paper and vulcanized fiber are made by strengthening the direct bonding between cellulose fibers by treatment with concentrated sulfuric acid or zinc chloride solution during the manufacturing process, i.e., increasing the density of hydrogen bonds in the cellulose between cellulose fibers. Therefore, if parchment paper and vulcanized fibers are used as paper-based materials comprising the first paper-based material layer 3a and the second paper-based material layer 3e, the generation of paper dust can be effectively suppressed.

For example, parchment paper with a basis weight of 20 to 100 g/m² should be used, preferably with improved oil resistance so that the oil absorptiveness is 13 g/m² or less when mineral oil is used instead of water, in compliance with the test method for water absorptiveness of paper and paperboard (Cobb method). The thickness of the parchment paper is usually 20 to 100um, preferably 20-60 µm.

Vulcanized fibers are easier to make thicker than parchment paper due to the differences in reactivity during the manufacturing process. Accordingly, it is suitable when thicker paper is required as a paper-based material. The thickness of vulcanized fiber is usually 0.08 to 1 mm, preferably 0.1 to 0.5 mm, taking into account the ease of handling in production. The density of the vulcanized fiber is usually 0.8 to 1.4 g/cm³, preferably 0.8 to 1.3 g/cm³, which is preferred for ease of availability.

The parchment paper and vulcanized fibers may also be treated with resin impregnation or glass coating. The treatment described above strengthens the bond between the cellulose fibers and reduces the generation of paper dust when these papers are used as the paper-based material comprising the first paper-based material layer 3a and the second paper-based material layer 3e.

The intermediate layer 3c described above is a metal layer or a silica-deposited layer. The metal layer may be provided on one side of the paper-based material by bonding a metal foil such as aluminum foil with an adhesive containing a polyolefin resin, or by electron beam evaporation of aluminum or an alloy of aluminum and zinc under vacuum.

Next, the adhesives serving as a first adhesive layer 3b, bonding the first paper-based material layer 3a and the intermediate layer 3c, and a second adhesive layer 3d, bonding the intermediate layer 3c and the second paper-based material layer 3e, are described.
The adhesive used herein may be an adhesive composed of one or more polyolefin resins or a mixture of the polyolefin resin and other resins.

Specifically, polyolefin resins include polyethylene-based ionomers, polypropylene ionomers, polypropylene elastomers, polyethylene elastomers, high-density polyethylene and low-density polyethylene, and modified polyolefin resins such as maleic anhydride-modified polypropylene. Of these, polypropylene ionomers and maleic anhydride-modified polypropylene are preferred.

Specifically, other resins include acrylic acid copolymers, ethylene vinyl alcohol copolymers (EVOH), ethylene acrylic acid copolymers (EAA), ethylene-methacrylic acid copolymers (EMAA), epoxy resin, carbodiimide cross-linker, ethylene vinyl acetate copolymer or polyvinyl alcohol.

When polyolefin resin is mixed with other resins, the proportion of polyolefin resin in the total adhesive is about 60-97 % by weight, preferably 90-97% by weight. In the total of polyolefin resin and other resins, the proportion of polyolefin resin is about 68-98% by weight, preferably 93-98% by weight.

Adhesives containing polyolefin resin are used in the form of dispersion or emulsion-type resin solutions with polyolefin resins or mixtures of polyolefin resins and other resins as the base polymer. Additives such as silane coupling agents may be added to the resin solution as required. Among these, dispersion-type adhesives such as polypropylene ionomer and maleic anhydride-modified polypropylene are preferred because of their excellent adhesion and handling properties.

By applying an adhesive containing a polyolefin resin having excellent adhesive strength and ink resistance to paper materials, the layers of the first paper-based material layer 3a, the intermediate layer 3c, and the second paper-based material layer 3e can adhere to each other and prevent ink leakage.
Ink resistance is an expression of the degree to which elution of the resin component of the adhesive into the ink can be inhibited. When an adhesive containing polyolefin resin is used, the polyolefin resin does not elute into the ink due to its low compatibility with the ink, and the effect on ink resistance is expected.

Meanwhile, thermoplastic resins such as polyethylene (PE), polypropylene (PP), polyethylene terephthalate (PET), polyvinyl chloride (PVC), and polyvinyl alcohol (PVA) can be suitably used for the sealant layer 3f provided inside the second paper-based material layer 3e.

To form the container body 2 using the laminate 3 shown in Figs. 3 and 4, the outer half of the left side panel 10 of the body and the rear panel 12 of the body connected thereto are folded back by mountain folding at one of the folding guidelines 30, and the outer half of the right side panel 11 of the body and the rear panel 13 of the body connected thereto are folded back by mountain folding at the other folding guideline 31.

As a result, the adhesive allowance 12a of the rear panel 12 of the body is opposed to the edge of the rear panel 13 of the body. The first upper seal panels 21 and 22 and the second upper seal panels 24 and 25 face each other, and the first lower seal panels 41 and 42 and the second lower seal panels 44 and 45 face each other.

By applying ultrasonic waves, for example, to the sealant layer 3f described above in the opposite portions and pasting the opposite surfaces, the laminated material 3 is formed into a bag shape with the adhesive allowance 12a of the back, and the top and bottom to be sealed.

By folding up the oblique ruled lines 26 and 27 forming the top surface T side of the bag-shaped pasted body, a flat top surface T inclined toward the front is formed by forming approximately triangular flaps from side panels 18 and 19 on each side and folding the flaps over the left and right side panels 10 and 11 of the body, which are the left and right sides of the body 4 having a columnar shape, respectively (see flaps 33 in Figs. 1 and 2) .

Similarly, the oblique ruled lines 46 and 47 forming the bottom B side in the bag-shaped pasted body may be mountain folded to form an approximately triangular flap from side panels 38 and 39 on each side, and the flaps may be folded over bottom panels 35 and 36, respectively (see the flap 50 in Fig. 2) to form a flat bottom surface B.

With this, the body vertical folding lines 5, 6, 7, and 8 of the body on the laminated material 3 make it possible to obtain a container body 2 whose body 4 formed into a prismatic shape, as shown in Figs. 1 and 2.

The writing unit 61 is then attached to the mouth 29 formed on the top surface T of the container body 2 using adhesive or other means to form the writing instrument 1 shown in Figs. 1 and 2.

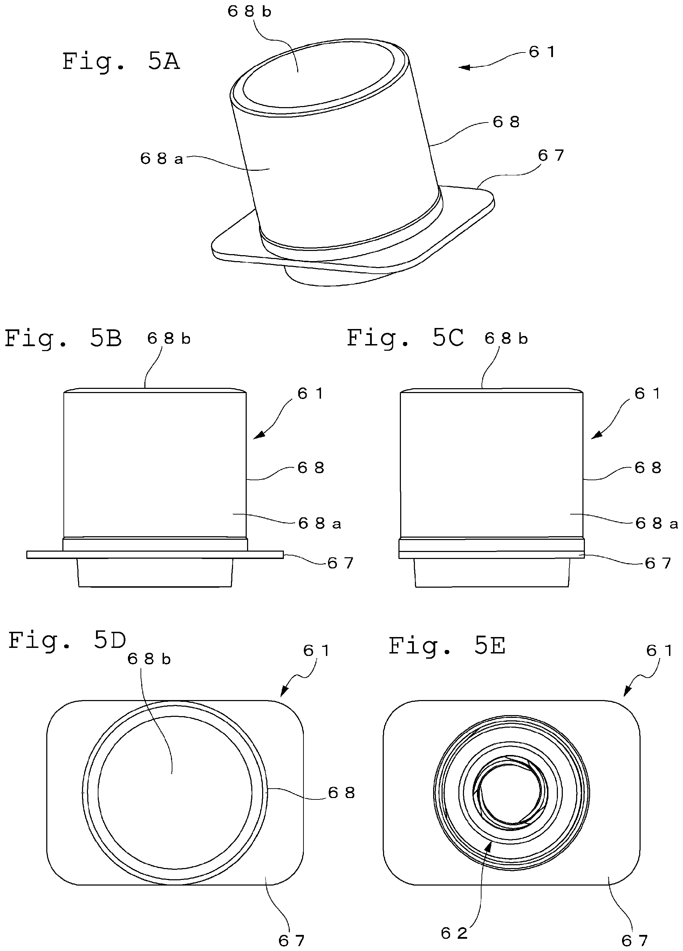

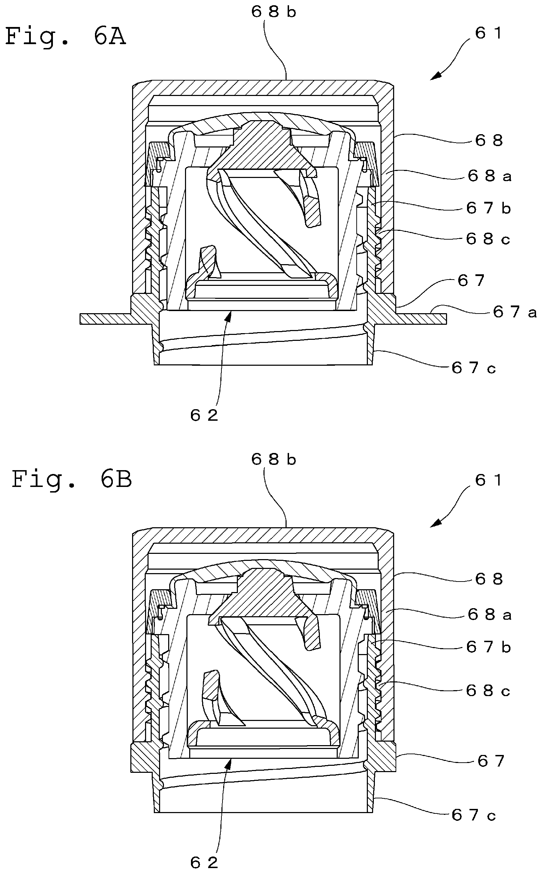

Figs. 5 and 6 show a writing unit 61 comprising of a holder 67 supporting a writing part 62 and a cap member 68 covering the writing part 62. The writing unit 61 is mounted with the writing part 62 contained within the holder 67, and the cap member 68 is detachably attached to the holder 67 by screwing. The above-described holder 67 is attached to the mouth 29 of the container body 2 along the above-described top surface T of the container body 2 to configure the writing instrument 1.

In the cap member 68, a flat closed-end face 68b made of a resin material is integrally molded on one end of the short and small cylindrical portion 68a and a female thread 68c is formed on the inner periphery of the cylindrical portion 68a, and the cap member 68 is detachably attached to the holder 67 described above by screwing.

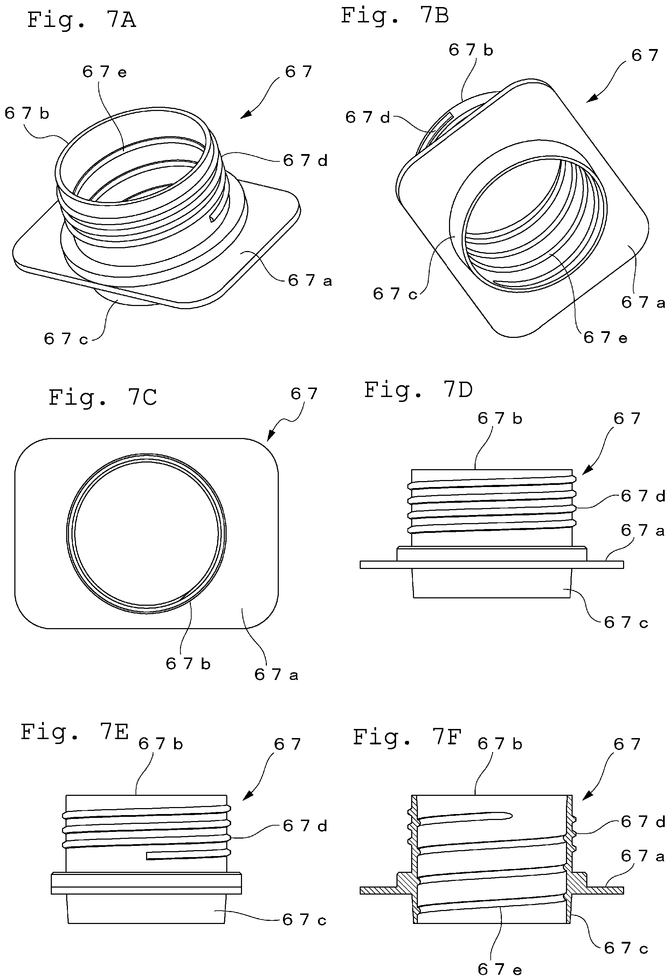

Fig. 7 shows a single-article configuration of the holder 67 described above, and in the holder 67 a first cylindrical portion 67b and a second cylindrical portion 67c are integrally molded made of resin on both sides of a flat flange 67a, and the outer circumference of the first cylindrical portion 67b is provided with a male thread 67d.

The cap member 68 is attached to the holder 67 by screwing the male thread 67d to the female thread 68c formed on the inner circumference of the cap member 68.

The inner circumferences of the first and second cylindrical portions 67b and 67c are coaxially formed and have the same inner diameter, and a female thread 67e is formed on the inner circumference. A writing part 62, which will be explained later, is detachably attached to the female thread 67e by screwing.

The second cylindrical portion 67c described above is inserted and positioned in the mouth 29 formed on the top surface T of the container body 2, and the flat flange 67a is attached to the top surface T by, for example, adhesive.

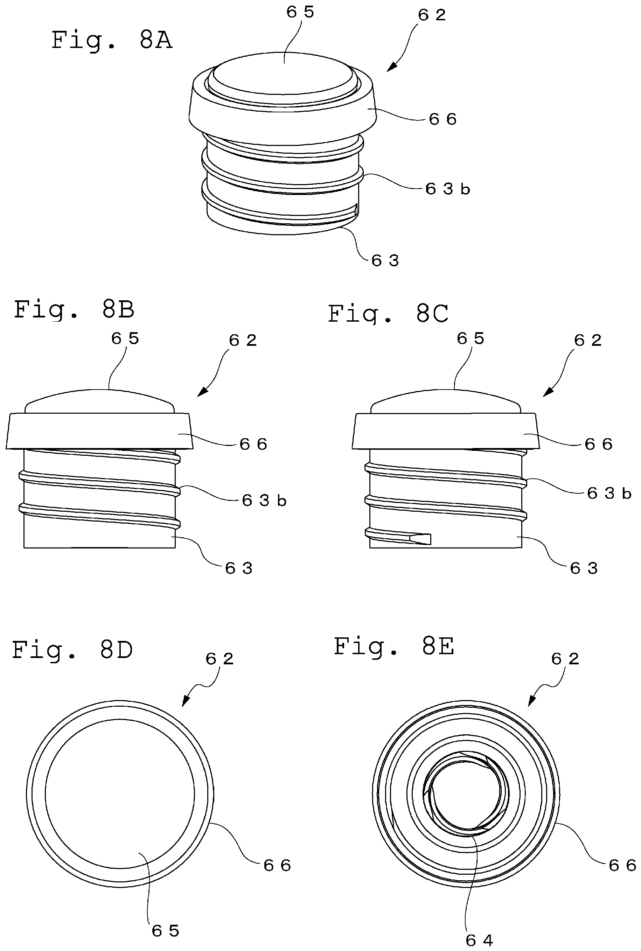

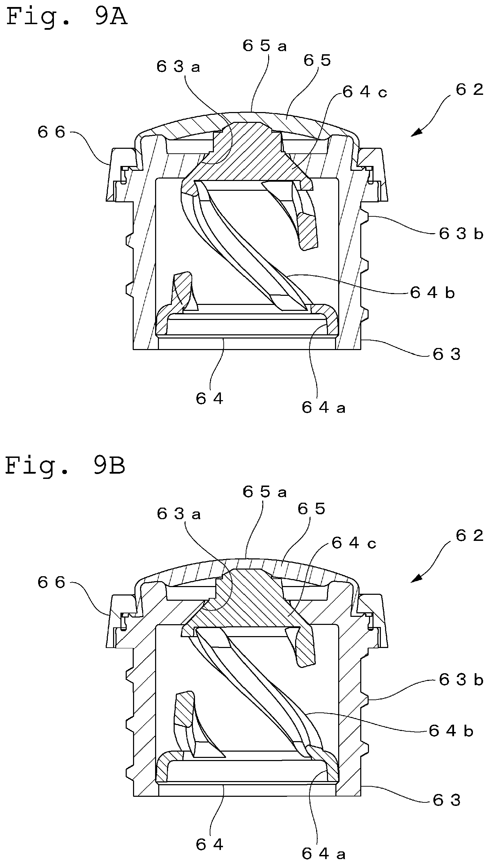

Figs. 8A to 8E and 9A and 9B show the writing part 62. The writing part 62 having a cylindrical shape comprises a valve seat member 63 having a valve opening 63a on the front side and provided with a male thread 63b on the periphery thereof; a valve body member 64 having a valve body 64c accommodated in the valve seat member 63, rising from a ring member 64a and biased by a plurality of spring bodies 64b formed in a spiral shape; a sheet-shaped writing member 65 attached to the front side of the valve body member 64; and a writing member support ring 66 for the writing member 65, which attaches the peripheral edge of the writing member 65 to the valve seat member 63.

The ring member 64a, the plurality of spring bodies 64b, the valve body 64c, and of which the valve body member 64 is composed are integrally molded of an elastic resin material.

The sheet-shaped writing member 65 is molded using a flexible foam sheet material. The above-described foam sheet material cut into a circular shape is used for the writing member 65, and a spherical convex portion 65a (see Fig. 9) is molded in the center to match the shape of the front side of the valve seat member 63 described above.

The portion forming the spherical convex portion 65a at the center of the writing member 65 is left with the thickness of the foam sheet material described above, and its periphery is formed by, for example, pressing so as to be thinner with respect to the spherical convex portion 65a.

The support ring 66 of the writing member 65 is used to press the periphery of the writing member 65 attached to the front face of the above-described valve seat member 63 along the front side periphery of the valve seat member 63, thereby supporting the planar writing member 65 along its periphery.

The support ring 66 is molded of a resin material and attached by welding along the peripheral face of the front side of the valve seat member 63.

The above-described writing part 62 has a male thread 63b on the periphery of the cylindrical valve seat member 63, which is detachably attached to the female thread 67e on the inner periphery of the above-described holder 67 using the male thread 63b.

Therefore, the writing member 65 of the writing part 62 can be replaced when worn, and the container body 2 can be reused by removing the writing part 62 and filling the container body 2 with ink.

Preferred writing inks contains in the container body 2 include pigments, an acetylene bond surfactant, a beta-propiolactone compound, and a solvent, wherein the acetylene bond surfactant has an HLB value of 6 to 15 and the beta-propiolactone compound has a carbon number of 14 to 20 fatty acids as a constituent raw material, and the alkyl ketene dimer is suitable.

In embodiments, the colorant can be selected from any conventionally known pigment or dye. Pigments include inorganic pigments such as metal oxides or metal salts, organic pigments such as organic dye pigments or lake pigments, and lustrous pigments such as aluminum pigments. Dyes include acid dyes, basic dyes, direct dyes, reactive dyes, vat dyes, sulfur dyes, metal complex dyes, cationic dyes, and disperse dyes. Among these, the use of titanium dioxide is particularly preferred, because a variety of colors can be achieved by combining it with complementary color pigments and other pigments described below.

In the writing ink of the embodiment, it is preferred that the pigments be surface-treated with a coating material, and for the coating material, an inorganic oxide such as silica, alumina, zirconia, zinc oxide, etc., or a metal such as molybdenum, or a phosphate salt is preferable. This is because the surface treatment of the pigments with the above coating material suppresses agglomeration of the pigments in the ink, thereby stabilizing the dispersion of the pigments, and also suppresses reactions between the pigments and water, thereby suppressing the formation of bubbles. In addition, when pigments containing metals are subjected to shear forces from a mixer during ink production, the pigments are deformed or damaged, and the elution of metal ions is suppressed, thereby improving the stability of the ink over time. Considering the above dispersion stability in ink, it is further preferable that the pigment coating material is an inorganic oxide including silica or alumina. As for the pigments, the amount of pigment coated by the coating material is preferably 0.01 mass% to 20 mass% of the coating material to 100 mass parts of the pigment after surface treatment by the coating material. When the coating amount is within the above numerical range, dispersion of the ink and suppression of elution of the metal can be easily achieved.

In the embodiment, when pigments surface-treated with inorganic oxides are used, it is preferred that the pigments surface-treated with inorganic oxides have a positive or negative value of the surface charge value in the ink, taking into account the dispersion stability in the ink. When using pigments surface-treated with inorganic oxides containing silica in particular, a negative surface charge value is preferred, and when using pigments surface-treated with inorganic oxides containing alumina, a positive surface charge value is preferred. Such pigments exhibit good dispersibility in the composition, but the dispersibility and re-dispersibility can be further improved by combining them with a pigment dispersant as described below. When the surface-treated pigment has the above surface charge, it is preferable for the surface-treated pigment to be titanium dioxide, considering the dispersion stability in the ink. The average particle size of the pigment should be between 0.01 um and 30 um on a volume basis. If the average particle size of the pigment is within the above numerical range, it is difficult for the pigment to penetrate the interfiber gaps and easy to obtain vivid coloring, even when written on paper, cloth, or other writing materials with large interfiber gaps. In addition, when inks containing pigments with average particle diameters in the range are used for writing instruments such as markers, ink delivery property can be improved. Note that the average particle diameters in this specification can be measured by the particle diameter (D50) at 50% accumulation in volume of the particle size distribution measured by the laser diffraction method using a laser diffraction particle size distribution measuring instrument (product name "Microtrac HRA9320-X100", Nikkiso Co., Ltd.) or the like, except for the partially specified case. The pigment content in the ink should be between 1 mass % and 40 mass % based on the total mass of the ink. If the pigment content is within the above numerical range, it is possible to prevent a decrease in the ink delivery property and also to maintain the sharpness and concealing properties of the ink and the handwriting formed therewith.

Preferably, the writing inks of the embodiments include a pigment dispersant. By combining a pigment dispersant with pigments, it is possible to inhibit the pigments from agglomerating with each other and to increase the stability of the ink. The pigment dispersant used in the embodiments is not limited as long as it is effective in increasing the dispersibility of the pigments. When pigments that are surface-treated with inorganic oxides are used, it is preferable to use pigment dispersants having anionic or cationic adsorption groups, taking into account the dispersion stability of the pigments. When pigments surface-treated with inorganic oxides including silica are used in the composition of the embodiment, pigment dispersants having cationic adsorption groups are preferred. Considering the stability and safety of the ink composition, the acid-base property should be near neutral. In the liquid state, the above pigments in the ink composition have a negative surface charge, so the cationic adsorption groups can easily adsorb to the pigments by electrical attraction and facilitate dispersion. One or more pigment dispersants can be used. When pigments surface-treated with inorganic oxides including alumina are used in the composition, the pigment dispersant should have an anionic adsorption group. In the above acid-base property, the above pigments have a positive value of surface charge, so the anionic adsorption groups can be easily adsorbed to the pigments by electrical attraction, thus facilitating dispersion. The content of the pigment dispersant in the embodiment should be 0.01 mass % to 5 mass % in terms of the solid content of the active ingredient. When the total content of the colorant in the whole ink composition is A and the total content of the pigment dispersant in the whole ink composition is B, B/A should be 0.005 ≤ B/A ≤ 0.5. When the content of the pigment dispersant and the ratio of the content of the pigment dispersant to that of the colorant are within the above numerical range, the dispersibility of the pigment becomes good, and the viscosity of the ink composition can be prevented from becoming excessively high.

The writing ink of the embodiment comprises a penetrant. The penetrant is preferably a surfactant having an HLB value of 4 to 18, taking into account the effectiveness in improving wettability, and the stability of dissolution to the ink composition. Here, the hydrophile-lipophile balance (HLB) value of the surfactant is a value for evaluating the hydrophilicity of the compound proposed by William Griffin and is calculated by the following formula (1). The HLB value by the Griffin method is the value falling in the range of 0 to 20, with higher values indicating that the compound is more hydrophilic. HLB value = 20 x (mass % of hydrophilic groups) = 20 x (sum of formula weight of hydrophilic groups / molecular weight of surfactant)

One or more surfactants selected from the group consisting of surfactants having acetylene bonds in their structure, fluorine-based surfactants, silicone-based surfactants, and sulfosuccinic acid-based surfactants are preferably used as penetrants. By incorporating the above surfactants in the ink, the surface tension can be lowered to improve the wettability of the ink on a non-permeable recording medium such as film, and the writing performance can be improved by suppressing the blurring and drop-out against a non-permeable recording medium. Among the above-mentioned penetrants, surfactants having acetylene bonds are very stable and have long-lasting effects in improving wettability and can improve writability by suppressing the blurring and drop-out against a non-permeable recording medium. Preferred penetrants are acetylene glycol-based surfactants, which are excellent at suppressing bubble formation, and allow the effect of smoothing the surface of the handwriting by suppressing the foaming of handwriting during writing. The content of surfactant with acetylene bond should be 0.001 to 1.5 mass%. When the content is within the above numerical range, it is possible to achieve both the suppression of foaming of handwriting and the improvement of wettability.

The ink according to the embodiment preferably comprises a beta-propiolactone compound. The beta-propiolactone compound in the embodiment is a compound having a β-propiolactone ring. When writing on writing material having large gaps between fibers, such as paper and cloth, the compound, by adsorbing with colorant particles, polyolefin particles, and complementary color pigments described below in the ink composition, and forming bulky aggregates of the colorant, prevents the colorant from penetrating the writing material through the large gaps between fibers, and makes the colorant to easily adhere to the fibers on the surface of the writing material, thereby resulting in good coloration of the handwriting. When writing on a non-permeable surface, the colorant is adsorbed onto the writing surface, improving the fixability of the handwriting. Since the beta-propiolactone compound has an anti-slip effect, the ink delivery portion of the writing instrument is inhibited from slipping when writing on the surface of the handwriting formed by the composition, even when the surface of the handwriting is covered with a lubricating substance such as hand grease, whereby the beta-propiolactone compound also has the effect of suppressing the interruption of handwriting when writing. In the embodiment, by using the above-mentioned penetrant in combination with the β-propiolactone compound, not only is the writing performance improved on the non-penetrating recording media improved, but also the fixability of the handwriting is improved, and even on writing materials having large interfiber gaps, such as paper and cloth, excellent coloring and high fixability of the handwriting can be achieved, wherein the ink composition for writing instruments can be made into ink compositions for writing on both non-permeable and permeable surfaces. In the embodiment, the β-propiolactone compound is not limited as long as it achieves the above effects, but it is preferred to be an alkyl ketene dimer composed of a fatty acid having a carbon number of 10 to 24 as a constituent raw material. When the carbon number of the fatty acid is within the above numerical range, the β-propiolactone compound is likely to adsorb with the colorant to form bulky aggregates, and can also be stably dispersed in the ink composition. Furthermore, from the point of view of the stable dispersion, an alkyl ketene dimer composed of a fatty acid as constituent raw materials having a carbon number of 14 and 20 is further preferred. Alkyl ketene dimers may also consist of a plurality of fatty acids as constituent raw materials having different carbon numbers, as long as the carbon numbers of the constituent fatty acids are within the above range. The β-propiolactone compound used in the embodiment is particularly preferred in that the alkyl ketene dimer contains fatty acids having 18 carbons as a constituent raw material, considering the formation of a bulky aggregate and dispersibility. Such alkyl ketene dimers should have an average particle diameter of 0.1 um to 2.0 um. If the average particle size is within this numerical range, the alkyl ketene dimer is likely to form a bulky aggregate with a colorant, for example, and achieve an excellent ink delivery property. The alkyl ketene dimer is preferably used as an emulsion, thereby maintaining high stability over time. The content of the β-propiolactone compound is preferably 0.1 mass % to 4 mass % for the whole ink composition. When the content is within the above numerical range, it is possible to prevent the ink viscosity from becoming too high and the ink delivery property from deteriorating during writing. When the sum of the total content of the colorant described above in the whole ink composition and the total content of the complementary pigment in the whole ink composition described below is A, and the total content of the β-propiolactone compound in the whole ink composition is B, and the ratio B/A is preferably in the range of 0.005 ≤ B/A ≤ 0.5. This is because when the ratio is in the numerical range, the colorant can be more easily fixed on the surface of the writing surface, resulting in good coloration, and the viscosity of the ink composition does not become too high, resulting in good ink delivery property and excellent writing performance.

Preferably, the ink of the embodiment comprises a poorly water-soluble resin. The poorly water-soluble resin is a resin whose solubility in water (amount of solute in 100 g of water) is less than 1.0 g. In the ink composition, the resin binds to the above-described bulky aggregates, colorants, and polyolefin particles to be described below, and adheres to the writing surface during writing, thereby improving the fixability and rub resistance of the handwriting and the coloration of the handwriting. Therefore, in the writing ink of the embodiment the use of a β-propiolactone compound in combination with a poorly water-soluble resin improves the fixability and coloring of handwriting, so it is preferable to use both together. In the embodiment, it is preferable to use the poorly water-soluble resin as an emulsion or dispersion, which allows the poorly water-soluble resin to assume a stable dispersion state. In order to improve the coloring of handwriting, fixability of handwriting, and rub resistance, the compositions of the embodiments are polyolefin resin, acrylic resin, nylon resin, and polyester resins, and more preferably including one or more of the following. The inclusion of polyolefin resin or acrylic resin allows for both good coloring and high fixability and rub resistance of the handwriting, and such effects are effectively achieved by using a beta-propiolactone compound in combination with the above poorly water-soluble resin. When the coloring and fixing properties of the ink are further considered, a copolymer of ethylene and acrylic acid is further preferred as the polyolefin resin used in the ink composition, and further, a copolymer of ethylene and acrylic acid denatured to be a self-emulsifying type is particularly preferred. The acrylic resin used in the embodiment is a polymer containing acrylic acid or methacrylic acid in the repeating unit, and a single or multiple types of acrylic resin can be used. When further improvements in handwriting fixability and rub resistance are considered, acrylic-styrene resins are preferred, and more preferably, self-crosslinking acrylic-styrene copolymer resins are preferred. The molecular weight of the above acrylic resins is not particularly limited, but those with a weight average molecular weight of 1,000 to 1,000,000 are generally used. The nylon and polyester resins used in the embodiment are not particularly limited as long as they are effective in improving the coloring properties of the ink composition, handwriting fixability, and rub resistance. The content of the poorly water-soluble resin should be 0.1 to 10% by mass of the whole ink composition. When the total content of the above-described beta-propiolactone compound in the whole ink composition is A and the total content of the above-described poorly water-soluble resin in the whole ink composition is B, the B/A ratio is preferably 0.1 ≤ B/A ≤ 5. When the content of the poorly water-soluble resin and the ratio of the content of the poorly water-soluble resin to that of the beta-propiolactone compound are within the above numerical range, the fixability of the colorant to the writing surface is excellent and the excellent writing properties are available.

Solvents include water and mixtures of water and organic solvents. For water, common water such as ion exchange water, distilled water, and tap water can be used. If a mixture of water and an organic solvent is used, the organic solvent can be ethanol, normal propanol, isopropanol, etc. Although diols or triols with relatively high boiling points such as glycerin, ethylene glycol, diethylene glycol, tri-ethylene glycol, propylene glycol, and polyethylene glycol can be used, the blending amount of solvent should be small. The organic solvent content should be between 1 mass % and 30 mass % of the total solvent mass. If the organic solvent content is within the above numerical range, based on the total mass of the solvent, it is possible to achieve both good drying performance and handwriting drying properties.

The solvent content in the ink is preferably from 20 mass % to 90 mass %, based on the total mass of the composition. If the solvent content is within the above numerical range, each component can be stably dissolved or dispersed, and bulky agglomerates with easy re-dispersibility can be formed in the ink.

The writing ink compositions of the embodiments can also provide higher fixability and rub resistance to handwriting by using polyolefin resin particles. Polyolefin resin particles are fine particles composed of polyolefins such as polyethylene and polypropylene, and mixtures thereof with surface lubricity, and are used to inhibit excessive force from being applied to handwriting when they are subjected to external forces such as rubbing. Polyolefin resin particles are a different type of polyolefin resin than the poorly water-soluble resins described above. The molecular weight of these polyolefins is not limited, but polyolefins with a mass average molecular weight of, for example, 500 to 100,000 are preferred. When the mass-average molecular weight of the polyolefin resin particles is within the above numerical range, when this ink is used in a writing instrument such as a marker for writing, it is possible to impart higher smoothness to the writing line formed and higher rub resistance to the writing lines, and good handwriting can be obtained. Polyolefin resin particles may contain materials other than polyolefin if necessary. Therefore, the use of polyolefin resin in combination with the above-described poorly water-soluble resin is preferred because it is easier to improve the coloring properties of the handwriting, the fixability of the handwriting, and the rub resistance, especially when writing on non-permeable recording media. The shape of the polyolefin resin particles is not limited and can take any shape, including irregular, spherical, needle, plate, and square. The average particle diameter of polyolefin resin particles is 0.1 um to 35um. If the average particle size of the polyolefin resin particles is within the above numerical range, when this ink is used in a writing instrument such as a marker to write with, it is possible to impart higher smoothness to the handwriting lines formed and higher rub resistance therewith, resulting in good handwriting. Furthermore, from the point of view of imparting high rub resistance, it is also preferable that the particle size be between 0.1 um and 25 um. The average particle diameter of the polyolefin resin particles can be measured by the Coulter counter method. The content of polyolefin resin particles in the ink should be 0.01 mass % to 10 mass % based on the total mass of the ink. When the content of polyolefin resin particles is in the above numerical range, the ink delivery property can be maintained, and higher smoothness of the handwriting lines can be provided.

The ink of the embodiment may contain complementary color pigments to adjust the color of the resulting writing line. In particular, when white titanium dioxide is selected as the main pigment particle, various colors can be obtained by combining it with complementary color pigments. The complementary color pigment is not limited, and pigments of various colors such as red, blue, yellow, green, white, and black can be used, or the pigment can be dispersed in a solvent to form a pigment dispersion. The content of complementary color pigments in the ink should be 0.01 mass % to 15 mass % based on the total mass of the ink.

The ink may also contain body pigments, preservatives, anti-foaming agents, rust inhibitors, pH adjusters, bubble inhibitors, bubble absorbers, shear-viscosity reducing agents, and viscosity adjusters, as required.

The ink viscosity of the embodiment is preferred to be low. The viscosity of the composition can be measured with an E-type rotational viscometer (manufactured by AMETEK Brookfield Inc.). Specifically, the viscosity of the ink at 20°C should be 1 to 100 mPa·s when measured at a rotational speed of 100 rpm (shear rate of 380 1/s). It should be 1 to 600 mPa·s when measured at a rotational speed of 10 rpm (shear rate of 38 1/s). At a rotational speed of 1 rpm (shear rate of 3.8 1/s), it should be 1 to 3000 mPa·s. If the viscosity of the ink is within the above numerical range, the ink delivery property can be improved, and writing on non-permeable recording media such as film can be improved.

The surface tension of the ink should be between 10 mN/m and 35 mN/m at 20°C. When the surface tension is within the above numerical value range, it tends to prevent the blurring and drop-out on paper, improves the wettability of the ink, and improves the writing performance by preventing blurring and drop-out on the non-permeable recording media. In particular, surfactants having acetylene bonds in their structure are suitable for adjusting the surface tension of the ink. The surface tension is obtained by measuring in a 20°C environment by the vertical plate method using a platinum plate with a surface tensiometer manufactured by Kyowa Interface Science Co., Ltd. The pH of the ink should be between 6 and 10 is preferred. When the pH of the ink is within the above numerical range, it is possible to suppress discoloration and excessively high viscosity of the ink composition. When pigments treated with inorganic oxides having silica or alumina are used in the ink composition, the dispersibility of the pigments can be further improved by additionally using the above pigment dispersant. In the embodiment, the pH value can be measured at 20°C by, for example, an IM-40S type pH meter (manufactured by DKK-TOA CORPORATION). The ink of the embodiment can be prepared by any conventionally known method. Specifically, the ink can be prepared by mixing the above-mentioned components in the required amounts and mixing with various types of agitators such as propeller agitators, high-speed agitation type dispersers (product name: Homo-disper), or homogenizers (product name: Homo-Mixer), or with various types of dispersing machines such as bead mills.

In addition, by eliminating the conventional stirring balls that are placed in the ink container to re-disperse the colorant, it is possible to provide a writing instrument that reduces manufacturing costs and makes the container easier to recycle.

A valve opening 63a of the valve seat member 63, and an inner plug (valve) formed by the valve body 64c of the valve body member 64 are mounted on the writing part 62 of the writing instrument 1 of this embodiment.

Therefore, by pressing the writing member 65 of the writing part 62 against the writing surface W as shown in Fig. 2, the valve body 64c can be retracted against the force of the spring body 64b via the writing member 65. As a result, the sealing of the valve body 64c to the valve opening 63a is released, and the ink in the container body 2 is supplied to and absorbed by the writing member 65.

Then, writing is achieved on the writing surface W by the ink being exuded from the writing member 65 toward the spherical convex portion 65a.

In the above embodiment, the configuration is used in which the writing part 62 attached to the mouth 29 of the container body 2 is provided with an inner plug (valve) having a valve opening 63a and a valve body 64c.
However, the writing instrument 1 according to the present invention does not necessarily require the inner plug described above, and the present invention can also be used for direct liquid writing instruments in which the ink in the container body 2 penetrates directly into the writing member 65.

### Industrial Applicability

The writing instrument is useful as a writing instrument that contributes to environmental protection by de-plasticizing, e.g., a writing instrument having an ink container formed of a material including a paper-based material, in order to reduce environmental pollution.

### Reference Signs List

- 1: writing instrument
- 2: container body
- 3: laminated material
- 3a: first paper-based material layer
- 3b: first adhesive layer
- 3c: intermediate layer
- 3d: second adhesive layer
- 3e: second paper-based material layer
- 3f: sealant layer
- 3g: printed layer
- 4: body
- 29: mouth
- 61: writing unit
- 62: writing part
- 65: writing member
- 67: holder
- 68: cap member
- T: top side
- B: bottom
- W: writing surface

## Claims

1. A writing instrument comprising a container body containing ink, a writing part disposed at a mouth of the container body, and a detachable cap member covering the writing part, and allowing writing on a writing surface by allowing ink in the container body to exude from the writing part, wherein the container body is made of a paper-based laminated material having a sealant layer on an innermost container surface, and the sealant layer is pasted together to form the container body.

2. The writing instrument according to claim 1, wherein the writing part is detachably attached to the mouth of the container body.

3. The writing instrument according to claim 2, wherein a holder supporting the writing part is disposed at the mouth of the container body, and the writing part is to be attached to the holder by screwing.
